(19) Europäisches Patentamt / European Patent Office / Office européen des brevets

(11) **EP 2 502 003 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(51) Int Cl.:
*B60H 1/22* (2006.01)        *F23N 1/08* (2006.01)
*F24H 3/02* (2006.01)        *F24H 9/20* (2006.01)

(21) Anmeldenummer: **10798493.2**

(22) Anmeldetag: **10.11.2010**

(86) Internationale Anmeldenummer:
**PCT/DE2010/075127**

(87) Internationale Veröffentlichungsnummer:
**WO 2011/060778 (26.05.2011 Gazette 2011/21)**

(54) **HEIZGERÄT**

HEATING DEVICE

APPAREIL DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2009 DE 102009044608**

(43) Veröffentlichungstag der Anmeldung:
**26.09.2012 Patentblatt 2012/39**

(73) Patentinhaber: **Webasto AG**
**82131 Stockdorf (DE)**

(72) Erfinder:
• **OTTO, Peter**
**83624 Otterfing (DE)**

• **BÄCKER, Christian**
**82256 Fürstenfeldbruck (DE)**
• **PÖHNER, Michael**
**85748 Garching (DE)**

(74) Vertreter: **Ciesla, Dirk**
**Ciesla Patentanwälte**
**Rotmoosweg 7**
**87629 Füssen - Hopfen (DE)**

(56) Entgegenhaltungen:
**EP-A2- 1 950 496     WO-A1-2004/000590**
**US-A- 6 089 221**

**Beschreibung**

Die vorliegende Erfindung betrifft ein Heizgerät, insbesondere für einen mobilen Einsatz, sowie ein Verfahren zum Ansteuern eines solchen Heizgeräts.

Heizgeräte für einen mobilen Einsatz bzw. für mobile Anwendungen (im Folgenden: mobile Heizgeräte) werden insbesondere im Fahrzeugbereich als Stand- oder Zuheizer eingesetzt. Standheizer (bzw. Standheizungen) sind sowohl bei ruhendem als auch bei laufendem Fahrzeugmotor betreibbar, während Zuheizer nur bei laufendem Fahrzeugmotor betreibbar sind.

In derartigen Heizgeräten wird üblicherweise Brennstoff mit Brennluft zur Erzeugung von Heizwärme umgesetzt. Hierfür weisen solche mobilen Heizgeräte eine Brennkammer auf, in der die Umsetzung in der Regel in einer flammenden Verbrennung erfolgt. Es ist bekannt, derartige mobile Heizgeräte mit flüssigen Brennstoffen, wie z.B. Diesel, Benzin oder Ethanol, oder mit gasförmigen Brennstoffen zu betreiben.

Bei mobilen Heizgeräten wird zwischen Flüssigkeits- bzw. Wasserheizgeräten, bei denen die freigesetzte Wärme in einem Wärmetauscher des Heizgeräts auf Flüssigkeit als Heizmedium (in der Regel Motor-Kühlflüssigkeit) übertragen wird, und Luftheizgeräten, bei denen die freigesetzte Wärme in einem Wärmetauscher des Heizgeräts auf Luft als Heizmedium übertragen wird, unterschieden. Luftheizgeräte sind dabei üblicherweise derart ausgestaltet, dass die freigesetzte Wärme in dem Wärmetauscher unmittelbar auf Luft übertragen wird, die einem zu beheizenden Bereich, insbesondere einem Fahrzeuginnenraum, zugeführt wird.

Für einen Betrieb derartiger Heizgeräte müssen der Brennkammer sowohl Brennstoff als auch Brennluft zugeführt werden. Der Brennstoff kann der Brennkammer über eine Brennstofffördervorrichtung, z.B. eine Dosierpumpe, in genau vorbestimmten Mengen zugeführt werden. Die Brennluft kann der Brennkammer über ein Brennluftgebläse zugeführt werden, das mittels eines Elektromotors angetrieben wird. Das Verbrennungsluftverhältnis λ (auch Luftzahl oder Luftverhältnis genannt) für die Umsetzung in der Brennkammer wird durch das Verhältnis der Zufuhrmenge des Brennstoffs zu der Zufuhrmenge der Brennluft bestimmt. Das Verbrennungsluftverhältnis λ wird bei einem solchen Aufbau somit über die Drehzahl des Brennluftgebläses und die Förderrate der Brennstofffördervorrichtung bestimmt.

Für einen Betrieb des Heizgeräts muss ferner das zu beheizende Heizmedium durch den Wärmetauscher gefördert werden. Bei Luftheizgeräten kann dies durch ein Heizmediumgebläse erfolgen.

EP 1 950 496 A2 zeigt ein Fahrzeugheizgerät umfassend: eine Brenneranordnung mit einer Brennkammer, eine Brennstoffzuführanordnung zum Einspeisen von Brennstoff in die Brennkammer, ein Verbrennungsluft-Förderorgan zum Fördern von Verbrennungsluft in die Brennkammer, eine Wärmetauscheranordnung mit einem die Brenneranordnung wenigstens bereichsweise umgebenden Wärmetauschergehäuse, ein Heizmedium-Förderorgan zum Fördern von zu erwärmendem Heizmedium durch die Wärmetauscheranordnung entlang einer Außenseite des Wärmetauschergehäuses, eine Temperaturfühleranordnung zur Erfassung einer mit der Temperatur des Heizmediums in einem Abströmbereich der Wärmetauscheranordnung in Zusammenhang stehenden Temperaturgröße, und eine Ansteuervorrichtung, welche ein die Temperaturgröße repräsentierendes Signal von der Temperaturfühleranordnung empfängt und die Temperaturgröße mit einer zugeordneten Temperaturgrößenschwelle vergleicht. Die Ansteuervorrichtung ist dazu ausgebildet, die Temperaturgrößenschwelle zu erhöhen, wenn die Heizleistung durch Verringerung der Verbrennungsluft-Fördermenge oder/und der Brennstoff-Fördermenge zu verringern ist.

WO 2004/000590 A1 beschreibt ein wärmeerzeugendes Gerät mit einem eine Reaktionskammer aufweisenden Reaktor, einem Wärmetauscher, durch den in der Reaktionskammer erzeugte Wärme auf einen flüssigen oder gasförmigen Wärmeträger übertragbar ist, einer Fördereinrichtung zum Fördern des Wärmeträgers und einer Schutzeinrichtung gegen Überhitzung des wärmeerzeugenden Geräts. Die Schutzeinrichtung weist einen Wärmeträgermassenstrommesser auf, der in einer Förderleitung für den Wärmeträger angeordnet ist.

Dieses Dokument offenbart ein Heizgerät gemäß den Oberbegriff des Anspruchs 1, sowie ein Verfahren gemäß dem Oberbegriff des Anspruchs 10. Es ist Aufgabe der vorliegenden Erfindung, ein verbessertes Heizgerät und ein verbessertes Verfahren zum Betreiben eines Heizgeräts bereitzustellen.

Die Aufgabe wird durch ein Heizgerät nach Anspruch 1 gelöst. Vorteilhafte Weiterbildungen sind in den abhängigen Ansprüchen angegeben.

Unter einem gemeinsamen Antrieb für das Brennluftgebläse und das Heizmediumgebläse wird dabei verstanden, dass das Brennluftgebläse und das Heizmediumgebläse derart mit dem gemeinsamen Antrieb gekoppelt sind, dass eine Drehzahl des Brennluftgebläses ein festes Verhältnis zu einer Drehzahl des Heizmediumgebläses aufweist. Dabei können das Brennluftgebläse und das Heizmediumgebläse zum Beispiel derart mit dem gemeinsamen Antrieb gekoppelt sein, dass sie dieselbe Drehzahl aufweisen, z.B. über eine gemeinsame Welle mit gemeinsamen Antrieb verbunden sein. Der zumindest eine Sensor zum Überwachen des Massenstroms des Heizmediums kann z.B. ein Massenstromsensor sein, der direkt den Massenstrom misst, er kann aber auch durch einen Sensor gebildet sein, der den Massenstrom des Heizmediums nur indirekt erfasst. Zum Beispiel kann der zumindest eine Sensor zum Überwachen des Massenstroms des Heizmediums durch einen Temperatursensor gebildet sein, der die Austrittstemperatur des Heizmediums aus dem Heizgerät misst. Aus der gemessenen Austrittstemperatur kann auf den Massenstrom des Heizmediums rückgeschlossen werden. Insbesondere kann mit einem derartigen Temperatursensor ermittelt werden, dass der Massenstrom des Heizmediums zu gering ist, wenn die gemessene Temperatur einen vorgegebenen Grenzwert übersteigt. Das Überwachen des Massenstroms kann z.B. aber auch über das Überwachen der Temperaturdifferenz zwischen einer Ansaugtemperatur des Heizmediums und einer Ausblastemperatur des Heizmediums erfolgen. Da die Steuerung dazu ausgebildet ist, das Verhältnis zwischen der Menge des Heizmediums und der Menge des der Brennkammer zugeführten Brennstoffs zu verändern, wird bei vorgegebener Förderrate des Brennstoffs (aufgrund des gemeinsamen Antriebs) eine Änderung der Drehzahl des Brennluftgebläses und damit des Brennluftmassenstroms (über einen angemessenen Bereich) zugelassen. Somit wird nicht eine bestimmte Verbrennungsluftzahl λ vorgegeben und auf diese geregelt, sondern es wird eine Veränderung der Verbrennungsluftzahl λ (innerhalb vorgegebener Grenzen) zugelassen. In dieser Weise wird erreicht, dass bei einem kompakten und kostengünstigen gemeinsamen Antrieb für das Brennluftgebläse und das Heizmediumgebläse bei gegebener Förderrate der Brennstofffördervorrichtung der Massenstrom des Heizmediums verändert werden kann. Aufgrund dieser Ausgestaltung muss das Heizmediumgebläse nicht unabhängig von den Betriebsbedingungen bzw. der Anwendung mit einer großen Gebläseleistung des Heizmediumgebläses betrieben werden. In dieser Weise kann die durchschnittliche Leistungsaufnahme deutlich reduziert werden und der mittlere Geräuschpegel durch Strömungsgeräusche des Heizmediums kann verringert werden. Die Veränderung in Abhängigkeit von dem Massenstrom des Heizmediums kann dabei z.B. direkt basierend auf einem gemessenen Massenstrom erfolgen (z.B. für den Fall, dass der Sensor den Massenstrom direkt misst) oder indirekt basierend auf einem Messsignal, dass Rückschlüsse auf den Massenstrom des Heizmediums zulässt, wie z.B. einer gemessenen Temperatur des Heizmediums an einem Austritt des Heizgeräts (Ausblastemperatur) oder der Temperaturdifferenz zwischen der Ansaugtemperatur (stromaufwärts des Wärmetauschers) des Heizmediums und der Ausblastemperatur des Heizmediums. Unter Massenstrom wird die Masse des Heizmediums pro Zeit verstanden. Die Steuerung ist dazu ausgebildet, in Abhängigkeit von dem Massenstrom des Heizmediums das Verhältnis zwischen der Menge des der Brennkammer zugeführten Brennstoffs und der Menge der der Brennkammer zugeführten Brennluft zu verändern.

Gemäß einer Ausgestaltung ist die Steuerung dazu ausgebildet, bei unveränderter Förderrate der Brennstofffördervorrichtung eine Drehzahl des gemeinsamen Antriebs in Abhängigkeit von dem Massenstrom des Heizmediums zu verändern. Durch die Veränderung der Drehzahl des gemeinsamen Antriebs in Abhängigkeit von dem Massenstrom des Heizmediums kann das Heizmediumgebläse mit einer Gebläseleistung betrieben werden, die an die tatsächlichen Gegebenheiten des jeweiligen Betriebszustands bzw. der jeweiligen Anwendung angepasst ist.

Gemäß einer Ausgestaltung ist die Steuerung dazu ausgebildet, bei zu niedrigem Massenstrom des Heizmediums die Drehzahl des gemeinsamen Antriebs zu erhöhen. Bei dieser Ausgestaltung kann durch Erhöhen der Drehzahl der Massenstrom des Heizmediums vergrößert werden. Dabei ist keine Veränderung der Förderrate der Brennstofffördervorrichtung erforderlich. Insbesondere kann der gemeinsame Antrieb (und damit das Heizmediumgebläse) bei dieser Ausgestaltung immer mit einer Drehzahl betrieben werden, die einer Untergrenze eines (für die jeweilige Förderrate des Brennstoffs) vorgegebenen Drehzahlbereichs entspricht, und die Drehzahl wird nur erhöht, wenn der überwachte Massenstrom des Heizmediums zu gering ist. Das Heizmediumgebläse wird somit immer nur mit der erforderlichen Gebläseleistung betrieben, sodass die Leistungsaufnahme reduziert ist und der Geräuschpegel gesenkt ist. Die Beurteilung, ob der Massenstrom zu niedrig ist, kann z.B. durch Vergleichen eines gemessenen Massenstroms mit einem voreingestellten Sollwert erfolgen. In dem Fall, bei dem die Überwachung des Massenstroms über einen Temperatursensor erfolgt, kann z.B. auf einen zu niedrigen Massenstrom geschlossen werden, wenn die gemessene Temperatur einen voreingestellten Sollwert übersteigt.

Gemäß einer Ausgestaltung ist die Steuerung dazu ausgebildet, die Drehzahl des gemeinsamen Antriebs innerhalb eines für die Förderrate der Brennstofffördervorrichtung spezifischen Drehzahlbereichs zu verändern. In diesem Fall ist ein Drehzahlband in Abhängigkeit von der Förderrate zugelassen, d.h. eine Obergrenze und eine Untergrenze des Drehzahlbereichs sind in Abhängigkeit von der Förderrate vorgegeben. Mit anderen Worten wird nicht eine λ-Betriebskennlinie vorgegeben, sondern ein λ-Betriebskennfeld. Durch die Vorgabe des spezifischen Drehzahlbereichs wird erreicht, dass die Verbrennungsluftzahl λ nur in einem begrenzten Bereich verändert werden kann, sodass gewährleistet ist, dass sich das Heizgerät in Bezug auf den Verbrennungsprozess und auf Emissionswerte immer in einem zulässigen Bereich befindet.

Gemäß einer Ausgestaltung ist die Steuerung dazu ausgebildet, den gemeinsamen Antrieb mit einer Drehzahl zu betreiben, die einer Untergrenze des Drehzahlbereichs entspricht, und die Drehzahl nur bei zu niedrigem Massenstrom des Heizmediums zu erhöhen. In diesem Fall ist sichergestellt, dass das Heizmediumgebläse immer mit einer moderaten Gebläseleistung betrieben wird, die nicht das erforderliche Maß übersteigt.

Gemäß einer Ausgestaltung ist die Steuerung dazu ausgebildet, die Förderrate der Brennstofffördervorrichtung zu reduzieren, wenn ein zu niedriger Massenstrom des Heizmediums vorliegt und der gemeinsame Antrieb eine Drehzahl aufweist, die einer Obergrenze des Drehzahlbereichs entspricht. In diesem Fall kann besonders zuverlässig verhindert werden, dass aufgrund eines zu niedrigen Massenstroms eine Überhitzung des Heizgeräts oder nachgeordneter Komponenten auftritt. Insbesondere, wenn zunächst immer eine möglichst niedrige Drehzahl angesteuert wird, die Drehzahl sequentiell bis zu der Obergrenze erhöht wird, solange ein zu niedriger Massenstrom des Heizmediums vorliegt, und erst bei Erreichen der Obergrenze die Förderrate der Brennstofffördervorrichtung reduziert wird, kann somit vorteilhaft auch bei widrigen Bedingungen zuverlässig Heizleistung in den zu beheizenden Bereich eingebracht werden, ohne das frühzeitig ein Absenken der Heizleistung in dem Heizgerät erforderlich wird.

Gemäß einer Ausgestaltung ist der zumindest eine Sensor zum Überwachen des Massenstroms des Heizmediums ein Temperatursensor zum Erfassen der Temperatur des erwärmten Heizmediums. Ein solcher Temperatursensor kann kostengünstig vorgesehen werden. Ein zu niedriger Massenstrom des Heizmediums kann durch Vergleichen der gemessenen Temperatur des Heizmediums mit einer Referenztemperatur zuverlässig festgestellt werden.

Gemäß einer Ausgestaltung ist ein Temperatursensor zum Erfassen der Temperatur des Heizmediums stromaufwärts des Wärmetauschers vorgesehen. In diesem Fall kann der Massenstrom des Heizmediums aus der Temperaturdifferenz zwischen einer Ansaugtemperatur des Heizmediums und einer Ausblastemperatur des Heizmediums und der Förderrate der Brennstofffördervorrichtung zuverlässig bestimmt werden.

Gemäß einer Ausgestaltung ist das Heizgerät als Luftheizgerät ausgebildet, bei dem die freigesetzte Wärme in dem Wärmetauscher auf Luft als zu beheizendes Heizmedium übertragen wird.

Die Aufgabe wird auch durch ein Verfahren zum Betreiben eines Heizgeräts nach Anspruch 10 gelöst. Vorteilhafte Weiterbildungen ergeben sich aus den abhängigen Ansprüchen.

Mit dem Verfahren werden die oben in Bezug auf das Heizgerät beschriebenen Vorteile erreicht. Insbesondere werden eine Reduzierung der mittleren Leistungsaufnahme des Heizmediumgebläses und eine Verringerung des Geräuschpegels erreicht.

Gemäß einer Realisierung weist das Verfahren den Schritt auf: - Verändern einer Drehzahl des gemeinsamen Antriebs bei unveränderter Förderrate der Brennstofffördervorrichtung in Abhängigkeit von dem Massenstrom des Heizmediums. In diesem Fall kann das Heizgerät mit einer Heizmediumgebläseleistung betrieben werden, die an die jeweiligen Betriebsbedingungen angepasst ist.

Gemäß einer Realisierung weist das Verfahren den Schritt auf: - Erhöhen der Drehzahl des gemeinsamen Antriebs, falls ein zu niedriger Massenstrom des Heizmediums vorliegt. In dieser Weise wird sichergestellt, dass das Heizmediumgebläse immer nur mit einer so niedrigen Drehzahl betrieben wird, die für das Aufrechterhalten eines ausreichenden Massenstroms nötig ist. Wenn der Massenstrom zu niedrig wird, wird zuverlässig gegengesteuert.

Gemäß einer Ausgestaltung erfolgt das Überwachen des Massenstroms des Heizmediums durch Vergleichen einer Temperatur des erwärmten Mediums mit einem Referenzwert. In diesem Fall ist das Überwachen des Massenstroms des Heizmediums in besonders kostengünstiger Weise zuverlässig realisiert.

Gemäß einer Ausgestaltung wird auf einen zu niedrigen Massenstrom des Heizmediums geschlossen, wenn die Temperatur des erwärmten Heizmediums den Referenzwert übersteigt. In diesem Fall wird in sehr einfacher und effizienter Weise der Massenstrom des Heizmediums überwacht.

Wenn das Überwachen des Massenstroms des Heizmediums durch Überwachen der Temperatur des Heizmediums vor dem Erwärmen und der Temperatur des erwärmten Heizmediums erfolgt, kann der Massenstrom zuverlässig überwacht werden. Das Überwachen kann dabei mit Sensoren erfolgen, die auch für andere Funktionen des Heizgeräts genutzt werden können.

Weitere Vorteile und Weiterbildungen ergeben sich aus der nachfolgenden Beschreibung von Ausführungsbeispielen unter Bezugnahme auf die beigefügten Zeichnungen.

Fig. 1 ist eine schematische Darstellung eines Heizgeräts gemäß einer Ausführungsform.
Fig. 2 ist eine schematische Darstellung eines Betriebskennbandes bei der Ausführungsform.
Fig. 3 ist ein schematisches Flussdiagramm zur Erläuterung der Ansteuerung bei der Ausführungsform.

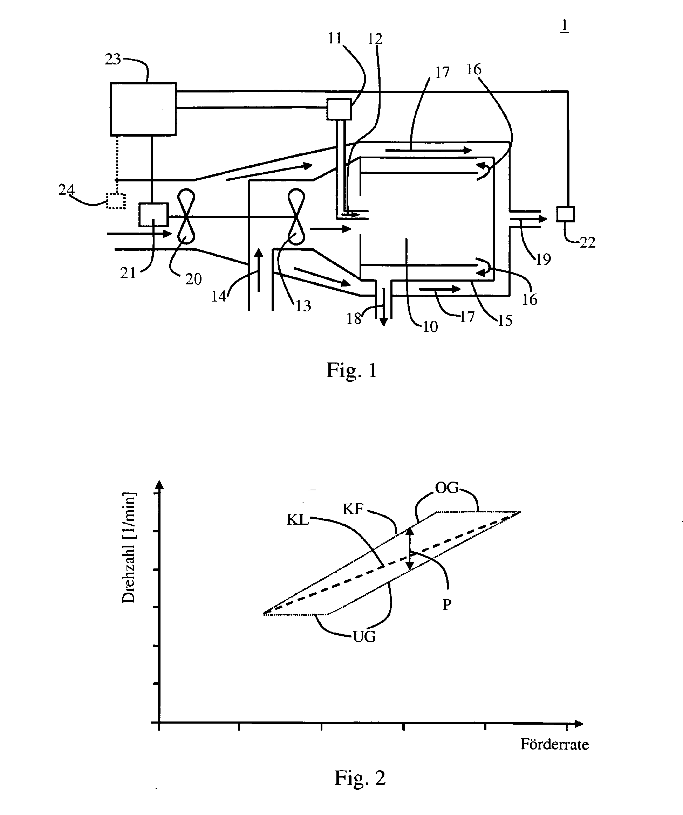

Eine Ausführungsform wird im Folgenden unter Bezugnahme auf die Fig. 1 bis 3 beschrieben. Das in Fig. 1 schematisch dargestellte Heizgerät 1 ist als ein Luftheizgerät ausgebildet, d.h. das zu beheizende Heizmedium ist bei der Ausführungsform durch Luft gebildet. Das Heizgerät 1 gemäß der Ausführungsform ist als mobiles Heizgerät insbesondere als Kraftfahrzeugheizgerät ausgebildet. Das Heizgerät 1 kann z.B. durch ein Standheizgerät oder ein Zuheizgerät gebildet sein.

Das Heizgerät 1 weist eine Brennkammer 10 auf, in der Brennstoff mit Brennluft zur Freisetzung von Heizwärme umgesetzt wird. Der Brennstoff kann bei der Ausführungsform z.B. durch einen Kraftstoff gebildet sein, der auch für den Antriebsmotor des Kraftfahrzeugs zum Einsatz kommt, insbesondere Benzin oder Diesel. Es sind aber auch andere Brennstoffe möglich. Der Brennstoff wird der Brennkammer 10 mittels einer Brennstofffördervorrichtung 11 zugeführt, wie schematisch durch einen Pfeil 12 dargestellt ist. Die Brennstofffördervorrichtung 11 kann beispielsweise in bekannter Weise durch eine Dosierpumpe gebildet sein. Es sind aber auch andere Brennstofffördervorrichtungen möglich. Die Brennluft wird der Brennkammer 10 durch ein (in Fig. 1 schematisch dargestelltes) Brennluftgebläse 13 zugeführt, wie schematisch durch Pfeile 14 dargestellt ist.

Die in der Brennkammer 10 erzeugten heißen Verbrennungsabgase werden durch einen Wärmetauscher 15 geleitet, wie schematisch durch Pfeile 16 dargestellt ist. In dem Wärmetauscher 15 wird zumindest ein Großteil der freigesetzten Wärme von den Verbrennungsabgasen auf ein Heizmedium übertragen, das ebenfalls entlang eines Strömungspfads über den Wärmetauscher 15 geleitet wird, wie schematisch durch Pfeile 17 dargestellt ist. Die abgekühlten Verbrennungsabgase werden über einen Abgasauslass abgeführt, wie schematisch durch einen Pfeil 18 dargestellt ist. Das erwärmte Heizmedium wird über ein entsprechendes Leitungssystem einem zu beheizenden Bereich zugeführt, der z.B. durch den Innenraum eines Fahrzeugs gebildet sein kann, wie schematisch durch den Pfeil 19 in Fig. 1 dargestellt ist.

Der Massenstrom des Heizmediums entlang des Strömungspfads durch den Wärmetauscher 15 und zu dem zu beheizenden Bereich wird durch ein Heizmediumgebläse 20 erzeugt. Das Heizmediumgebläse 20 und das Brennluftgebläse 13 werden über einen gemeinsamen Antrieb 21 angetrieben. Der gemeinsame Antrieb 21 kann z.B. durch einen Elektromotor gebildet sein. Bei der dargestellten Ausführungsform sind das Heizmediumgebläse 20 und das Brennluftgebläse 13 derart mit dem gemeinsamen Antrieb gekoppelt, dass eine Drehzahl des Heizmediumgebläses 20 ein festes Verhältnis zu einer Drehzahl des Brennluftgebläses 13 aufweist. Das Brennluftgebläse 13 und das Heizmediumgebläse 20 können z.B. derart mit dem gemeinsamen Antrieb 21 gekoppelt sein, dass beide dieselbe Drehzahl aufweisen, es sind allerdings auch unterschiedliche Drehzahlen möglich. Die Kopplung kann z.B. über eine gemeinsame Antriebswelle realisiert sein.

In dem Strömungspfad des Heizmediums ist ein Sensor 22 zum Überwachen des Massenstroms des Heizmediums angeordnet. Der Sensor 22 kann z.B. durch einen Sensor gebildet sein, der den Massenstrom des Heizmediums misst. Ein solcher Sensor, der den Massenstrom des Heizmediums direkt misst, kann nicht nur, wie in der Fig. 1 dargestellt, in dem Strömungspfad des Heizmediums nach dem Austritt aus dem Wärmetauscher angeordnet sein, sondern auch an anderen Stellen in dem Strömungspfad, insbesondere z.B. auch in dem Strömungspfad des Heizmediums vor dem Eintritt in den Wärmetauscher. Bei der dargestellten Ausführungsform ist der Sensor 22 jedoch durch einen Temperatursensor gebildet, der in dem Strömungspfad des erwärmten Heizmediums stromabwärts des Wärmetauschers 15 angeordnet ist. Der Temperatursensor misst die Temperatur des erwärmten Heizmediums. In dieser Weise wird der Massenstrom des Heizmediums indirekt überwacht, wie im Folgenden noch eingehender beschrieben wird.

Der Sensor 22, der gemeinsame Antrieb 21 und die Brennstofffördervorrichtung 11 sind über jeweilige Verbindungsleitungen mit einer Steuerung 23 verbunden, die dazu ausgebildet ist, den Betrieb des Heizgeräts zu steuern. Die Steuerung 23 und die Brennstofffördervorrichtung 11 sind derart ausgebildet, dass die Brennstofffördervorrichtung 11 mit verschiedenen Förderraten betrieben werden kann, d.h. dass verschiedene Brennstoffmengen pro Zeit zu der Brennkammer gefördert werden können. Für den Fall, dass die Brennstofffördervorrichtung 11 durch eine Dosierpumpe gebildet ist, kann dies z.B. durch eine Ansteuerung mit verschiedenen Taktfrequenzen realisiert werden.

Die Brennluftzuführung und das Brennluftgebläse 13 sind derart ausgebildet, dass die pro Zeiteinheit in die Brennkammer 10 zugeführte Brennluft durch die Drehzahl des Brennluftgebläses 13 vorgegeben ist. Die Verbrennungsluftzahl $\lambda$ des Umsetzungsprozesses in der Brennkammer 10 bestimmt sich daher durch die Drehzahl des Brennluftgebläses 13 und die Förderrate der Brennstofffördervorrichtung 11. Damit bei einer vorgegebenen Förderrate der Brennstofffördervorrichtung 11 ein bestimmtes Verbrennungsluftverhältnis $\lambda$ vorliegt, muss das Brennluftgebläse 13 somit eine vorgegebene Drehzahl aufweisen. Es ist zu beachten, dass dieser Zusammenhang nur für eine vorgegebene Luftdichte der zugeführten Brennluft zutrifft und sich die Verbrennungsluftzahl $\lambda$ mit abnehmender Luftdichte zu kleineren Werten verschieben würde (d.h. zu einem fetteren Verbrennungsgemisch). Eine abnehmende Luftdichte tritt bekanntermaßen insbesondere in Abhängigkeit von der absoluten Höhe über dem Meeresspiegel auf.

Da das Heizmediumgebläse 20 und das Brennluftgebläse 13 mit dem gemeinsamen Antrieb 21 gekoppelt sind, führt eine Änderung der Drehzahl des gemeinsamen Antriebs 21 immer sowohl zu einer Änderung des Massenstroms des Heizmediums als auch zu einer Änderung des Massenstroms der Brennluft. Bei einer vorgegebenen Förderrate der Brennstofffördervorrichtung 11 (und bei konstanter Brennluftdichte) führt somit eine Änderung der Drehzahl des gemeinsamen Antriebs zu einer Änderung der Verbrennungsluftzahl $\lambda$. Wenn bei einer gegebenen Förderrate der Brennstofffördervorrichtung 11 eine bestimmte vorgegebene Verbrennungsluftzahl $\lambda$ erreicht werden soll, bestimmt dies direkt die erforderliche Drehzahl des Brennluftgebläses 13 (und damit des gemeinsamen Antriebs 21). Da das Heizmediumgebläse 20 auch über den gemeinsamen Antrieb 21 angetrieben wird, wird dadurch auch der Massenstrom des Heizmediums bestimmt.

Fig. 2 zeigt eine schematische Darstellung, bei der auf der horizontalen Achse (x-Achse) die Förderrate der Brennstofffördervorrichtung 11 aufgetragen ist und auf der vertikalen Achse (y-Achse) die Drehzahl des gemeinsamen Antriebs. Bei bekannten Heizgeräten erfolgt ein Stellen der Drehzahl eines Antriebs für ein Brennluftgebläse in Abhängigkeit von einer Förderrate einer Brennstofffördervorrichtung derart, dass im Hinblick auf einen möglichst optimalen Verbrennungsprozess auf einen bestimmten Nennwert der Verbrennungsluftzahl $\lambda$ gestellt wird. Für diesen Fall ergibt sich die in Fig. 2 gestrichelt dargestellte Linie KL. Bei einem derartigen Stellen ergibt sich somit für jede (zulässige) Förderrate der Brennstofffördervorrichtung 11 eine entsprechende vorgegebene Drehzahl des gemeinsamen Antriebs 21 und somit auch eine vorgegebene Drehzahl des Heizmediumgebläses 20.

Bei der vorliegenden Ausführungsform ist die Steuerung 23 hingegen derart eingerichtet, dass nicht auf eine vorgegebene $\lambda$-Kennlinie gestellt wird, sondern ein in Fig. 2 punktiert dargestelltes $\lambda$-Betriebskennfeld KF realisiert ist. Mit anderen Worten wird bei der Ausführungsform zugelassen, dass bei gegebener Förderrate der Brennstofffördervorrichtung 11 der gemeinsame Antrieb 21 (und damit das Brennluftgebläse 13) mit Drehzahlen in einem Drehzahlbereich betrieben werden kann, der der entsprechenden Ausdehnung des Betriebskennfeldes KF in der vertikalen Richtung entspricht. Es wird also zugelassen, dass sich in dem vorgegebenen Rahmen verschiedene $\lambda$-Werte einstellen. Aufgrund der unterschiedlichen zugelassenen Drehzahlen des gemeinsamen Antriebs 21 bei einer vorgegebenen Förderrate, wie durch den Pfeil P in Fig. 2 schematisch dargestellt ist, wird somit auch ermöglicht, die Drehzahl des Heizmediumgebläses 20 in einem vorgegebenen Bereich zu verändern. Bei vorgegebener Förderrate der Brennstofffördervorrichtung 11 (die in etwa die interne Heizleistung in dem Heizgerät bestimmt) ist somit ermöglicht, den resultierenden Massenstrom des Heizmediums in einem vorgegebenen Bereich zu vergrößern oder zu verringern. Die Förderrate der Brennstofffördervorrichtung 11 kann z.B. durch eine Zieltemperatur des zu beheizenden Bereichs, durch eine von einem Nutzer eingegebene Soll-Heizleistung, durch die Differenz zwischen der Zieltemperatur in dem zu beheizenden Raum und einer vorliegenden Ist-Temperatur oder ähnliches vorgegeben werden.

Es ist zu beachten, dass die im Folgenden beschriebene Ansteuerung einen Betrieb des Heizgeräts 1 in einem Dauerbetriebszustand bzw. in einem Normalbetrieb betrifft und nicht einen Startvorgang des Heizgeräts unmittelbar nach einer jeweiligen Inbetriebnahme.

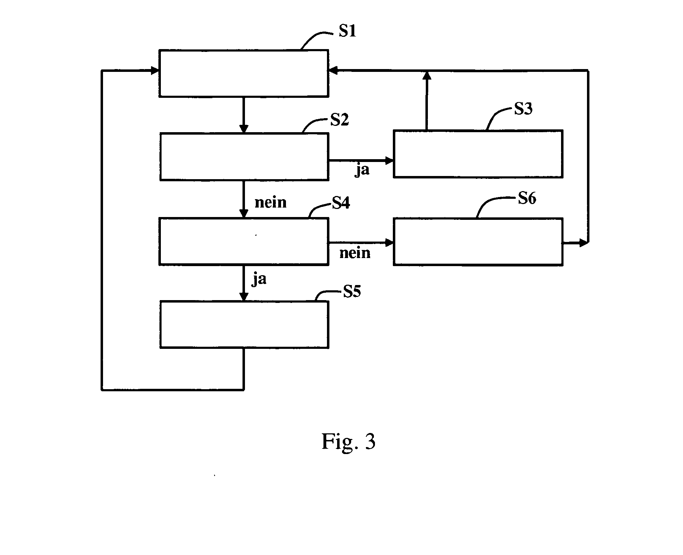

Die Ansteuerung wird im Folgenden unter Bezugnahme auf die Fig. 2 und 3 beschrieben. Gemäß der Ausführungsform steuert die Steuerung 23 den gemeinsamen Antrieb 21 derart an, dass dieser immer zunächst mit der für die vorgegebene Förderrate der Brennstofffördervorrichtung 11 niedrigsten zugelassen Drehzahl betrieben wird. Diese niedrigste zugelassene Drehzahl ist durch die jeweilige Untergrenze UG des Betriebskennfeldes KF vorgegeben. In einem Schritt S1 erfasst die Steuerung 23 das Signal des Sensors 22. In einem Schritt S2 prüft die Steuerung 23 das Signal des Sensors 22 im Hinblick darauf, ob ein ausreichender Massenstrom des Heizmediums erreicht wird. Für den Fall, dass der Sensor 22 unmittelbar den Massenstrom des Heizmediums misst, vergleicht die Steuerung 23 den ermittelten Massenstrom mit einem Sollwert. Für den bei der dargestellten Ausführungsform realisierten Fall, bei dem der Sensor 22 ein Temperatursensor ist, wird die Temperatur des aus dem Heizgerät 1 austretenden erwärmten Heizmediums mit einem Referenzwert verglichen, der in der Steuerung 23 hinterlegt ist. Wenn die gemessene Temperatur den Referenzwert übersteigt, schließt die Steuerung 23 darauf, dass der vorliegende Massenstrom des Heizmediums nicht ausreichend ist, um die in dem Heizgerät 1 freigesetzte Wärme in den zu beheizenden Raum abzuführen. Anstelle der beiden beschriebenen Möglichkeiten der Überwachung des Massenstroms des Heizmediums oder zusätzlich dazu kann die Überwachung auch über einen oder mehrere andere Sensoren erfolgen, die einen Rückschluss auf den Massenstrom des Heizmediums zulassen.

Kommt die Steuerung 23 in Schritt S2 zu dem Ergebnis, dass der Massenstrom des Heizmediums ausreichend ist ("ja"), wird in einem Schritt S3 geprüft, ob die Drehzahl des gemeinsamen Antriebs bereits der Untergrenze UG (s. Fig. 2) entspricht. Falls die Drehzahl bereits der Untergrenze UG entspricht, kehrt die Steuerung 23 zu Schritt S1 zurück. Falls die Drehzahl höher als die Untergrenze UG ist, senkt die Steuerung in Schritt S3 die Drehzahl (z.B. um ein vorgegebenes Maß) und kehrt erst anschließend zu Schritt S1 zurück.

Kommt die Steuerung 23 in Schritt S2 zu dem Ergebnis, dass der Massenstrom des Heizmediums zu niedrig ist ("nein"), also die freigesetzte Heizwärme nicht in einem ausreichenden Maß in den zu beheizenden Bereich gefördert wird, wird in einem Schritt S4 geprüft, ob die Drehzahl des gemeinsamen Antriebs 21 kleiner als die Obergrenze OG des Betriebskennfeldes KF für die vorliegende Förderrate der Brennstofffördervorrichtung 11 ist. Falls die Drehzahl des gemeinsamen Antriebs 21 kleiner als die Obergrenze OG ist ("ja"), wird die Drehzahl in einem Schritt S5 erhöht (z.B. um eine vorgegebenes Maß) und die Steuerung 23 kehrt anschließend zu dem Schritt S1 zurück.

Stellt die Steuerung 23 in dem Schritt S4 fest, dass die Drehzahl bereits der Obergrenze OG entspricht ("nein"), wird in einem Schritt S6 die Förderrate der Brennstofffördervorrichtung 11 herabgesetzt und die Steuerung 23 kehrt anschließend zu dem Schritt S1 zurück.

Mit der beschriebenen Ansteuerung des Heizgeräts 1 ist erreicht, dass der gemeinsame Antrieb 21 bei allen Förderraten der Brennstofffördervorrichtung 11 das Heizmediumgebläse 20 immer nur mit einer Gebläseleistung betreibt, die für einen ausreichenden Massenstrom des Heizmediums erforderlich ist. Das bedeutet, das Heizmediumgebläse 20 wird immer mit der niedrigsten möglichen Gebläseleistung betrieben. In dieser Weise wird die über alle möglichen Anwendungen und Betriebsbedingungen gemittelte mittlere elektrische Leistungsaufnahme des Heizgeräts 1 deutlich reduziert und der durch die Strömung des Heizmediums hervorgerufene Geräuschpegel wird auf ein Mindestmaß verringert.

Das zulässige Betriebskennfeld KF ist in der Steuerung hinterlegt. Das Betriebskennfeld ist derart gewählt, dass das Heizgerät in allen durch das Betriebskennfeld KF ermöglichten Zuständen in Bezug auf den Verbrennungsprozess und Emissionswerte (Russ, CO, etc.) zulässige Eigenschaften zeigt. Bei der Bestimmung des Betriebskennfeldes KF sind alle möglichen weiteren Schwankungseinflüsse auf die Verbrennungsluftzahl λ zu berücksichtigen.

Da bei der beschriebenen Ansteuerung des Heizgeräts 1 Drehzahlen des gemeinsamen Antriebs bis zu der Obergrenze OG zugelassen werden, kann verglichen mit einem Heizgerät, das auf eine vorgegebene λ-Kennlinie regelt, bei erschwerten Bedingungen (z.B. hohe Strömungswiderstände im Strömungspfad des Heizmediums) die in dem Heizgerät 1 bereitgestellte Heizleistung besser in den zu beheizenden Bereich gefördert werden.

Mit der beschriebenen Ansteuerung des Heizgeräts 1 ist ferner erreicht, dass die Steuerung 23 auch ohne zusätzlichen Luftdichtesensor oder Höhensensor eine Veränderung der Luftdichte kompensiert. Mit abnehmender Luftdichte der Brennluft sinkt bei gegebener Förderrate der Brennstofffördervorrichtung 11 und gegebener Drehzahl des gemeinsamen Antriebs 21 das Verbrennungsluftverhältnis λ. Gleichzeitig sinkt aber aufgrund der ebenfalls abnehmenden Dichte des Heizmediums der Massenstrom des Heizmediums, sodass auch die freigesetzte Wärme nicht mehr ausreichend in den zu beheizenden Bereich transportiert wird. In der Folge wird aufgrund der oben beschriebenen Ansteuerung die Drehzahl des gemeinsamen Antriebs 21 erhöht, sodass aufgrund der Drehzahlerhöhung des Brennluftgebläses der λ-Wert auch wieder erhöht wird.

Es ist somit ein kompaktes und kostengünstiges Heizgerät bereitgestellt, das eine geringere Leistungsaufnahme und einen niedrigeren Geräuschpegel bereitstellt und dabei Änderungen in der Luftdichte der Brennluft automatisch kompensiert.

Bei einer Modifikation des beschriebenen Ausführungsbeispiels erfolgt die Überwachung des Massenstroms des Heizmediums über zwei Temperatursensoren, wie im Folgenden beschrieben wird. Da die Modifikation ansonsten vollständig mit der beschriebenen Ausführungsform übereinstimmt, werden im Folgenden nur die Unterschiede bei der Überwachung des Massenstroms des Heizmediums beschrieben. Gemäß der Modifikation ist der Sensor 22 als Temperatursensor ausgebildet, der wiederum die Temperatur des erwärmten Heizmediums bei dem bzw. nach dem Austritt aus dem Wärmetauscher 15 (Ausblastemperatur) misst. Es ist jedoch zusätzlich ein Temperatursensor 24 vorgesehen, der die Temperatur des Heizmediums vor dem bzw. bei dem Eintritt in den Wärmetauscher 15 (Ansaugtemperatur) misst, wie in Fig. 1 gestrichelt dargestellt ist. Der zusätzliche Temperatursensor 24 ist ebenfalls mit der Steuerung 23 verbunden, sodass diese den gemessenen Temperaturwert auslesen kann. Die Steuerung 23 ermittelt die Temperaturdifferenz ΔT zwischen der von dem Sensor 22 gemessenen Temperatur (Ausblastemperatur) und der von dem Temperatursensor 24 gemessenen Temperatur (Ansaugtemperatur). Ferner steht der Steuerung 23 Information über die Förderrate der Brennstofffördervorrichtung 11 zur Verfügung. Aus der Förderrate der Brennstofffördervorrichtung 11 ergibt sich bei bekanntem Wirkungsgrad des Umsetzungsprozesses in der Brennkammer 10 die pro Zeit freigesetzte Wärmemenge Q. Bei bekannter spezifischer Wärmekapazität c des Heizmediums kann aus diesen Größen nun der Massenstrom $\dot{m}$ über die Gleichung

$$\dot{m} = \frac{\dot{Q}}{c \cdot \Delta T}$$

bestimmt werden. Die Beurteilung, ob der ermittelte Massenstrom ausreichend oder zu gering ist, erfolgt bei der Modifikation wieder durch Vergleich des ermittelten Wertes mit einem in der Steuerung hinterlegten Referenzwert. Bei Unterschreiten des Referenzwertes liegt ein zu niedriger Massenstrom vor. Die Ansteuerung des Heizgeräts durch die Steuerung 23 erfolgt bei der Modifikation wieder wie bezüglich der Ausführungsform beschrieben.

Das beschriebene Heizgerät und das beschriebene Verfahren zum Betreiben eines Heizgeräts weisen gegenüber einem Fall, bei dem ein Heizgerät derart angesteuert wird, dass die Drehzahl des Brennluftgebläses in Abhängigkeit von der jeweiligen Förderrate der Brennstofffördervorrichtung so gestellt wird, dass sich ein vorgegebenes festes Verbrennungsluftverhältnis λ ergibt, einige Vorteile auf. Bei einer Kopplung des Brennluftgebläses und des Heizmediumgebläses über einen gemeinsamen Antrieb müsste bei einem Stellen auf eine vorgegebene λ-Kennlinie bei der Entwicklung des Heizgeräts die Dimensionierung des Heizmediumgebläses derart erfolgen, dass für alle in Betracht kommenden Anwendungen und Betriebszustände ein ausreichender Massenstrom des Heizmediums erzielt wird, da die jeweilige Drehzahl des Heizmediumgebläses aufgrund der Förderrate der Brennstofffördervorrichtung vorgegeben wäre. Das Heizmediumgebläse müsste somit derart ausgelegt werden, dass unter allen Bedingungen die erzeugte Heizleistung in den zu beheizenden Bereich eingebracht wird, d.h. ein ausreichender Massenstrom des Heizmediums erreicht wird. Der im Betrieb erreichte Massenstrom des Heizmediums hängt insbesondere von den Strömungswiderständen des Strömungspfads des Heizmediums ab, die bei verschiedenen Anwendungen (z.B. in verschiedenen Fahrzeugen) erhebliche Unterschiede aufweisen. Ferner unterliegt der erreichte Massenstrom des Heizmediums auch betriebsbedingt, toleranzbedingt und applikationsbedingt erheblichen Schwankungen.

Um unter allen in Frage kommenden Bedingungen einen ausreichenden Massenstrom des Heizmediums zu gewährleisten, müsste das Heizmediumgebläse bei einem Stellen auf eine feste λ-Kennlinie so ausgelegt werden, dass eine große Gebläseleistung gegeben ist, um zu erreichen, dass auch bei ungünstigsten Bedingungen ein ausreichender Massenstrom des Heizmediums erreicht wird. Aufgrund dieser Auslegung würde das Heizgerät allerdings in vielen Betriebszuständen bzw. Anwendungen mit einer Gebläseleistung des Heizmediumgebläses betrieben, die deutlich höher als erforderlich ist. Dies würde sowohl zu einer unerwünscht hohen Leistungsaufnahme als auch zu einem unerwünscht hohen Geräuschpegel durch Strömungsgeräusche des Heizmediums führen. Diese Nachteile treten bei der beschriebenen Lösung nicht auf, bei der unterschiedliche Verhältnisse zwischen der Menge des der Brennkammer zugeführten Brennstoffs und der Menge der der Brennkammer zugeführten Brennluft (d.h. unterschiedliche Verbrennungsluftverhältnisse $\lambda$) zugelassen werden.

**Patentansprüche**

1.  Heizgerät, insbesondere für einen mobilen Einsatz, mit:

    einer Brennkammer (10) zum Umsetzen von Brennstoff mit Brennluft zur Freisetzung von Wärme,
    einem Wärmetauscher (15) zum Übertragen zumindest eines Teils der freigesetzten Wärme auf ein zu beheizendes Heizmedium,
    einer Brennstofffördervorrichtung (11) zum Zuführen von Brennstoff zu der Brennkammer (10),
    einem Brennluftgebläse (13) zum Zuführen von Brennluft zu der Brennkammer (10),
    einem Heizmediumgebläse (20) zum Fördern des Heizmediums,
    einem gemeinsamen Antrieb (21) für das Brennluftgebläse (13) und das Heizmediumgebläse (20),
    zumindest einem Sensor (22) zum Überwachen eines Massenstroms des Heizmediums, und
    einer Steuerung (23), die die Brennstofffördervorrichtung (11) und den gemeinsamen Antrieb (21) ansteuert,
    wobei die Steuerung (23) dazu ausgebildet ist, in Abhängigkeit von dem Massenstrom des Heizmediums das Verhältnis zwischen der Menge des Heizmediums und der Menge des der Brennkammer zugeführten Brennstoffs zu verändern, **dadurch gekennzeichnet, dass** die Steuerung dazu ausgebildet ist, in Abhängigkeit von dem Massenstrom des Heizmediums das Verhältnis zwischen der Menge des der Brennkammer zugeführten Brennstoffs und der Menge der der Brennkammer zugeführten Brennluft zu verändern.

2.  Heizgerät nach Anspruch 1, **dadurch gekennzeichnet, dass** die Steuerung dazu ausgebildet ist, bei unveränderter Förderrate der Brennstofffördervorrichtung (11) eine Drehzahl des gemeinsamen Antriebs (21) in Abhängigkeit von dem Massenstrom des Heizmediums zu verändern.

3.  Heizgerät nach Anspruch 1 oder 2, **dadurch gekennzeichnet, dass** die Steuerung (23) dazu ausgebildet ist, bei zu niedrigem Massenstrom des Heizmediums die Drehzahl des gemeinsamen Antriebs (21) zu erhöhen.

4.  Heizgerät nach einem der vorangehenden Ansprüche, **dadurch gekennzeichnet, dass** die Steuerung (23) dazu ausgebildet ist, die Drehzahl des gemeinsamen Antriebs (21) innerhalb eines für die Förderrate der Brennstofffördervorrichtung (11) vorgegebenen Drehzahlbereichs (KF) zu verändern.

5.  Heizgerät nach Anspruch 4, **dadurch gekennzeichnet, dass** die Steuerung (23) dazu ausgebildet ist, den gemeinsamen Antrieb (21) mit einer Drehzahl zu betreiben, die einer Untergrenze (UG) des Drehzahlbereichs (KF) entspricht, und die Drehzahl nur bei zu niedrigem Massenstrom des Heizmediums zu erhöhen.

6.  Heizgerät nach Anspruch 4 oder 5, **dadurch gekennzeichnet, dass** die Steuerung (23) dazu ausgebildet ist, die Förderrate der Brennstofffördervorrichtung (11) zu reduzieren, wenn ein zu niedriger Massenstrom des Heizmediums vorliegt und der gemeinsame Antrieb (21) eine Drehzahl aufweist, die einer Obergrenze (OG) des Drehzahlbereichs (KF) entspricht.

7.  Heizgerät nach einem der vorangehenden Ansprüche, **dadurch gekennzeichnet, dass** der zumindest eine Sensor (22) zum Überwachen des Massenstroms des Heizmediums einen Temperatursensor zum Erfassen der Temperatur des erwärmten Heizmediums aufweist.

8.  Heizgerät nach einem der vorangehenden Ansprüche, **dadurch gekennzeichnet, dass** ein Temperatursensor (24) zum Erfassen der Temperatur des Heizmediums stromaufwärts des Wärmetauschers (15) vorgesehen ist.

9.  Heizgerät nach einem der vorangehenden Ansprüche, **dadurch gekennzeichnet, dass** das Heizgerät (1) als Luftheizgerät ausgebildet ist, bei dem die freigesetzte Wärme in dem Wärmetauscher (15) auf Luft als zu beheizendes Heizmedium übertragen wird.

10. Verfahren zum Betreiben eines Heizgeräts, insbesondere eines Heizgeräts für einen mobilen Einsatz, wobei das Heizgerät (1) aufweist:

    eine Brennkammer (10) zum Umsetzen von Brennstoff und Brennluft zur Freisetzung von Wärme,

eine Brennstofffördervorrichtung (11) zum Zuführen von Brennstoff zu der Brennkammer (10),

ein Brennluftgebläse (13) zum Zuführen von Brennluft zu der Brennkammer (10),

ein Heizmediumgebläse (20) zum Fördern eines zu beheizenden Heizmediums,

wobei das Brennluftgebläse (13) und das Heizmediumgebläse (20) über einen gemeinsamen Antrieb (21) angetrieben werden,

wobei das Verfahren die folgenden Schritte aufweist:

- Überwachen eines Massenstroms des Heizmediums;
- Verändern des Verhältnisses zwischen der Menge des Heizmediums und der Menge des der Brennkammer zugeführten Brennstoffs in Abhängigkeit von dem Massenstrom des Heizmediums, **gekennzeichnet durch** den Schritt:

- Veränden des Verhältnisses zwischen der Menge des der Brennkammer zugeführten Brennstoffs und der Menge der der Brennkammer zugeführten Brennluft in Abhängigkeit von Massenstrom des Heizmediums.

**11.** Verfahren nach Anspruch 10, **gekennzeichnet durch** den Schritt:

- Verändern einer Drehzahl des gemeinsamen Antriebs (21) bei unveränderter Förderrate der Brennstofffördervorrichtung (11) in Abhängigkeit von dem Massenstrom des Heizmediums.

**12.** Verfahren nach Anspruch 10 oder 11, **gekennzeichnet durch** den Schritt:

- Erhöhen der Drehzahl des gemeinsamen Antriebs (21), falls ein zu niedriger Massenstrom des Heizmediums vorliegt.

**13.** Verfahren nach einem der Ansprüche 10 bis 12, **dadurch gekennzeichnet, dass** das Überwachen des Massenstroms des Heizmediums durch Vergleichen einer Temperatur des erwärmten Heizmediums mit einem Referenzwert erfolgt.

**14.** Verfahren nach Anspruch 13, **dadurch gekennzeichnet, dass** auf einen zu niedrigen Massenstrom des Heizmediums geschlossen wird, wenn die Temperatur des erwärmten Heizmediums den Referenzwert übersteigt.

**15.** Verfahren nach einem der Ansprüche 10 bis 12, **dadurch gekennzeichnet, dass** das Überwachen des Massenstroms des Heizmediums durch Überwachen der Temperatur des Heizmediums vor dem Erwärmen und der Temperatur des erwärmten Heizmediums erfolgt.

**Claims**

**1.** A heater, in particular for mobile use, having:

a combustion chamber (10) for converting fuel with combustion air in order to release heat,
a heat exchanger (15) for transferring at least some of the heat released to a heating medium to be heated,
a fuel delivery device (11) for feeding fuel to the combustion chamber (10),
a combustion air blower (13) for feeding combustion air to the combustion chamber (10),
a heating medium blower (20) for delivering the heating medium,
a common drive (21) for the combustion air blower (13) and the heating medium blower (20),
at least one sensor (22) for monitoring a mass flow of the heating medium, and
a controller (23), which controls the fuel delivery device (11) and the common drive (21),
wherein the controller (23) is adapted to vary the ratio between the quantity of heating medium and the quantity of fuel fed to the combustion chamber in dependence of the mass flow of the heating medium,
**characterized in that** the controller is adapted to vary the ratio between the quantity of fuel fed to the combustion chamber and the quantity of combustion air fed to the combustion chamber in dependence of the mass flow of the heating medium.

**2.** The heater as claimed in claim 1, **characterized in that** the controller is adapted to vary a rotational speed of the common drive (21) in dependence of the mass flow of the heating medium while the delivery rate of the fuel delivery device (11) remains the same.

**3.** The heater as claimed in claim 1 or 2, **characterized in that** the controller (23) is adapted to increase the rotational speed of the common drive (21) if the mass flow of the heating medium is too low.

**4.** The heater as claimed in one of the preceding claims, **characterized in that** the controller (23) is adapted to vary the rotational speed of the common drive (21) within a rotational speed range (KF) predetermined for the delivery rate of the fuel delivery device (11).

**5.** The heater as claimed in claim 4, **characterized in that** the controller (23) is adapted to operate the common drive (21) at a rotational speed which corresponds to a lower limit (UG) of the rotational speed range (KF), and to increase the rotational speed only if the mass flow of the heating medium is too low.

**6.** The heater as claimed in claim 4 or 5, **characterized in that** the controller (23) is adapted to reduce the delivery rate of the fuel delivery device (11) if the mass flow of the heating medium is too low and the common drive (21) has a rotational speed which corresponds to an upper limit (OG) of the rotational speed range (KF).

**7.** The heater as claimed in one of the preceding claims, **characterized in that** the at least one sensor (22) for monitoring the mass flow of the heating medium is a temperature sensor for detecting the temperature of the heated heating medium.

**8.** The heater as claimed in one of the preceding claims, **characterized in that** a temperature sensor (24) for detecting the temperature of the heating medium is provided upstream of the heat exchanger (15).

**9.** The heater as claimed in one of the preceding claims, **characterized in that** the heater (1) is adapted as an air heater, in which the heat released is transferred in the heat exchanger (15) to air as the heating medium to be heated.

**10.** A method for operating a heater, in particular a heater for mobile use, wherein the heater (1) has:

a combustion chamber (10) for converting fuel and combustion air in order to release heat,
a fuel delivery device (11) for feeding fuel to the combustion chamber (10),
a combustion air blower (13) for feeding combustion air to the combustion chamber (10),
a heating medium blower (20) for delivering a heating medium to be heated,
wherein the combustion air blower (13) and the heating medium blower (20) are driven by means of a common drive (21),
wherein the method has the following steps:

- monitoring a mass flow of the heating medium; and
- varying the ratio between the quantity of heating medium and the quantity of fuel fed to the combustion chamber in dependence of the mass flow of the heating medium, **characterized by** the step:

- varying the ratio between the quantity of the fuel fed to the combustion chamber and the quantity of the combustion air fed to the combustion chamber in dependence of the mass flow of the heating medium.

**11.** The method as claimed in claim 10, **characterized by** the following step:

- varying a rotational speed of the common drive (21) in dependence of the mass flow of the heating medium while the delivery rate of the fuel delivery device (11) remains the same.

**12.** The method as claimed in claim 10 or 11, **characterized by** the following step:

- increasing the rotational speed of the common drive (21) if the mass flow of the heating medium is too low.

**13.** The method as claimed in one of claims 10 to 12, **characterized in that** the mass flow of the heating medium is monitored by comparing a temperature of the heated heating medium with a reference value.

**14.** The method as claimed in claim 13, **characterized in that** the mass flow of the heating medium is inferred to be too low if the temperature of the heated heating medium exceeds the reference value.

**15.** The method as claimed in one of claims 10 to 12, **characterized in that** the mass flow of the heating medium is monitored by monitoring the temperature of the heating medium before heating and the temperature of the heated heating medium.

**Revendications**

**1.** Appareil de chauffage, en particulier pour une utilisation mobile, comprenant :

une chambre de combustion (10) pour faire réagir du combustible avec de l'air comburant en vue de libérer de la chaleur,
un échangeur de chaleur (15) pour transférer au moins une partie de la chaleur libérée à un fluide caloporteur à chauffer,
un dispositif de transport de combustible (11) pour acheminer du combustible à la chambre de combustion (10),
une soufflante d'air comburant (13) pour acheminer de l'air comburant à la chambre de combustion (10),
une soufflante de fluide caloporteur (20) pour transporter le fluide caloporteur,
un entraînement commun (21) pour la soufflante d'air comburant (13) et la soufflante de fluide caloporteur (20),

au moins un capteur (22) pour contrôler un débit massique du fluide caloporteur, et

une commande (23) qui commande le dispositif de transport de combustible (11) et l'entraînement commun (21),

la commande (23) étant réalisée de manière à modifier, en fonction du débit massique du fluide caloporteur, le rapport entre la quantité de fluide caloporteur et la quantité de combustible acheminé à la chambre de combustion, **caractérisé en ce que** la commande est réalisée de manière à modifier, en fonction du débit massique de fluide caloporteur, le rapport entre la quantité de combustible acheminé à la chambre de combustion et

la quantité d'air comburant acheminé à la chambre de combustion.

2. Appareil de chauffage selon la revendication 1, **caractérisé en ce que** la commande est réalisée de manière à modifier, pour une vitesse de transport inchangée du dispositif de transport de combustible (11), une vitesse de rotation de l'entraînement commun (21) en fonction du débit massique du fluide caloporteur.

3. Appareil de chauffage selon la revendication 1 ou 2, **caractérisé en ce que** la commande (23) est réalisée de manière à augmenter la vitesse de rotation de l'entraînement commun (21) lorsque le débit massique de fluide caloporteur est trop faible.

4. Appareil de chauffage selon l'une quelconque des revendications précédentes, **caractérisé en ce que** la commande (23) est réalisée de manière à modifier la vitesse de rotation de l'entraînement commun (21) à l'intérieur d'une plage de vitesse de rotation prédéfinie (KF) pour la vitesse de transport du dispositif de transport de combustible (11).

5. Appareil de chauffage selon la revendication 4, **caractérisé en ce que** la commande (23) est réalisée de manière à faire fonctionner l'entraînement commun (21) avec une vitesse de rotation qui correspond à une limite inférieure (UG) de la plage de vitesse de rotation (KF), et à augmenter la vitesse de rotation seulement lorsque le débit massique du fluide caloporteur est trop faible.

6. Appareil de chauffage selon la revendication 4 ou 5, **caractérisé en ce que** la commande (23) est réalisée de manière à réduire la vitesse de transport du dispositif de transport de combustible (11) lorsque le débit massique du fluide caloporteur est trop faible et que l'entraînement commun (21) présente une vitesse de rotation qui correspond à une limite supérieure (OG) de la plage de vitesse de rotation (KF).

7. Appareil de chauffage selon l'une quelconque des revendications précédentes, **caractérisé en ce que** l'au moins un capteur (22) pour contrôler le débit massique du fluide caloporteur présente un capteur de température pour détecter la température du fluide caloporteur chauffé.

8. Appareil de chauffage selon l'une quelconque des revendications précédentes, **caractérisé en ce qu'**un capteur de température (24) est prévu pour détecter la température du fluide caloporteur en amont de l'échangeur de chaleur (15).

9. Appareil de chauffage selon l'une quelconque des revendications précédentes, **caractérisé en ce que** l'appareil de chauffage (1) est réalisé sous forme d'appareil de chauffage d'air, dans lequel la chaleur libérée est transmise dans l'échangeur de chaleur (15) à l'air en tant que fluide caloporteur à chauffer.

10. Procédé pour faire fonctionner un appareil de chauffage, en particulier un appareil de chauffage pour une utilisation mobile, l'appareil de chauffage (1) présentant :

    une chambre de combustion (10) pour faire réagir du combustible et de l'air comburant en vue de libérer de la chaleur,
    un dispositif de transport de combustible (11) pour acheminer du combustible à la chambre de combustion (10),
    une soufflante d'air comburant (13) pour acheminer de l'air comburant à la chambre de combustion (10),
    une soufflante de fluide caloporteur (20) pour transporter un fluide caloporteur à chauffer,
    la soufflante d'air comburant (13) et la soufflante de fluide caloporteur (20) étant entraînées par un entraînement commun (21),
    le procédé présentant les étapes suivantes :

    - contrôle d'un débit massique du fluide caloporteur ;
    - modification du rapport entre la quantité de fluide caloporteur et la quantité de combustible acheminé à la chambre de combustion en fonction du débit massique du fluide caloporteur, **caractérisé par** l'étape suivante :

    - modification du rapport entre la quantité de combustible acheminé à la chambre de combustion et la quantité d'air comburant acheminé à la chambre de combustion en fonction du débit massique du fluide caloporteur.

11. Procédé selon la revendication 10, **caractérisé par** l'étape suivante :

- modification d'une vitesse de rotation de l'entraînement commun (21), vitesse de transport pour une inchangée du dispositif de transport de combustible (11), en fonction du débit massique du fluide caloporteur.

12. Procédé selon la revendication 10 ou 11, **caractérisé par** l'étape suivante :

- augmentation de la vitesse de rotation de l'entraînement commun (21) si le débit massique du fluide caloporteur est trop faible.

13. Procédé selon l'une quelconque des revendications 10 à 12, **caractérisé en ce que** le contrôle du débit massique du fluide caloporteur s'effectue par comparaison de la température du fluide caloporteur chauffé avec une valeur de référence.

14. Procédé selon la revendication 13, **caractérisé en ce que** l'on conclut que le débit massique du fluide caloporteur est trop faible si la température du fluide caloporteur chauffé dépasse la valeur de référence.

15. Procédé selon l'une quelconque des revendications 10 à 12, **caractérisé en ce que** le contrôle du débit massique du fluide caloporteur s'effectue par contrôle de la température du fluide caloporteur avant le chauffage et de la température du fluide caloporteur chauffé.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1950496 A2
- WO 2004000590 A1